# EUROPÄISCHE PATENTSCHRIFT

(11) **EP 1 413 854 B1**
(45) Veröffentlichungstag und Bekanntmachung des Hinweises auf die Patenterteilung: **16.05.2007**
(21) Anmeldenummer: 03024354.7
(22) Anmeldetag: 24.10.2003
(51) Int. Cl.: G01C 21/34, G08G 1/0968

(54) **Vorrichtung und Verfahren zum Navigieren eines Fahrzeugs**
Device for and method of navigating a vehicle
Dispositif et méthode pour naviger un véhicule

(30) Priorität: 25.10.2002 DE 10249692
(43) Veröffentlichungstag der Anmeldung: 28.04.2004
(73) Patentinhaber: Grundig Multimedia B.V., 1083HJ Amsterdam (NL)
(72) Erfinder: Körber, Matthias, 90768 Fürth (DE)
(74) Vertreter: Pröll, Jürgen

(56) Entgegenhaltungen:
- DE-A- 3 501 039
- DE-A- 10 030 819
- US-A- 6 005 494
- US-A1- 2002 082 771
- US-B1- 6 295 503
- PATENT ABSTRACTS OF JAPAN vol. 1997, no. 02, 28. Februar 1997 (1997-02-28) & JP 08 278157 A (AQUEOUS RES:KK;AISIN AW CO LTD), 22. Oktober 1996 (1996-10-22)

## Beschreibung

Die vorliegende Erfindung betrifft eine Vorrichtung und ein Verfahren zum Betreiben eines Fahrzeugs, für das Bestimmen einer von dem zu betreibenden Fahrzeug zurückzulegenden Wegstrecke.

Es sind Vorrichtungen und Verfahren zum Betreiben eines Fahrzeugs, die eine von dem Fahrzeug zurückzulegende Wegstrecke bestimmen, bekannt geworden. Derartige Vorrichtungen werden allgemein auch als Navigationssysteme bezeichnet. Derartige Navigationssysteme weisen Mittel zur Feststellung der jeweiligen Position des Fahrzugs, Mittel für die Speicherung von digitalisierten Straßenkarten sowie Mittel für die Bestimmung der zurückzulegenden Wegstrecke mittels der jeweiligen Position und der digitalisierten Straßenkarten auf. Zusätzlich weisen die bekannten Navigationssysteme Eingabemittel auf, mit welchen ein Bediener z. B. einen gewünschten Zielort eingeben kann, d. h. den Ort, welchen er mit dem Fahrzeug erreichen möchte, und für den, ausgehend von der augenblicklichen Position des Fahrzeugs, die zurückzulegenden Wegstrecke bestimmt werden soll. Weiterhin weisen die bekannten Navigationssysteme optische und/oder akustische Ausgabemittel auf, welche den Bediener über die zurückzulegende Wegstrecke informieren, z. B. durch die Ausgabe von Kommandos, wie "an der nächsten Kreuzung rechts abbiegen". Mit Hilfe der Eingabemittel kann der Bediener bei den bekannten Navigationssystemen auch Einfluß auf die von den Navigationssystemen bestimmte Wegstrecke nehmen, indem er angibt, ob die schnellste (zeitlich) oder kürzeste (Entfernung) Wegstrecke bestimmt werden soll.

Bei den bekannten Navigationssystemen kommt es jedoch häufig zu Problemen, da die zurückzulegende Wegstrecke ausschließlich anhand der vorhandenen Angaben, wie jeweilige Position, digitalisierte Straßenkarte, Zielort und schnellste oder kürzeste Wegstrecke bestimmt wird. Dadurch kann es vorkommen, daß von der vom Navigationssystem bestimmten Wegstrecke abgewichen werden muß, da das Fahrzeug für diese Wegstrecke nicht geeignet ist, z. B. weil das Gewicht des Fahrzeugs für eine auf dieser Wegstrecke liegende Brücke zu hoch ist. Um zu einer geeigneten Wegstrecke zurückkehren zu können, kann es dadurch zu erheblichen Umwegen kommen.

Aus DE 35 01 039 A1 ist ein Verfahren bekannt, welches bei der Ermittlung einer Fahrtstrecke zwischen einem Ausgangsort und einem Zielort zusätzlich zu den einzelnen hinterlegten Straßeninformationen und Wegstreckeninformationen, Zusatzinformationen, wie Befahrbarkeit einer Strasse, Verkehrsrichtung, Geschwindigkeitsbegrenzung, Gewichtsbelastung, Durchfahrtshöhe etc. berücksichtigt.

Aus US-B1-6 295 503 ist es bekannt in Abhängigkeit der Anzahl der Insassen die Wegstrecke auszuwählen. Da es z.B. Routen gibt, welche ein Fahrzeug nur dann durchfahren darf, wenn mehr als ein Passagier im Fahrzeug sind, wird die Route entsprechend den Fahrzeuginsassen vorgenommen.

Aus DE 100 30 819 A1 ist eine statische Navigation bekannt. Es werden an den Fahrer nur Warnhinweise ausgegeben, auf welche der Fahrer dann selbsttätig reagieren muss.

Aus JP 08 278157 A ist ein weiteres Navigationssystem bekannt. Es werden Parameter eines Fahrzeuges bei der Routenermittlung berücksichtigt.

Aus Entgegenhaltung US-A-6 005 494 B1 ist bekannt die Route eines Fahrzeuges in Abhängigkeit des optimalen Verbrauches des Fahrzeuges zu ermitteln.

Aus US 2002/082771 A1 ist ein Navigationssystem bekannt, bei welchem die bisherige Nutzung eines Fahrzeuges durch einen Fahrer und Eigenschaft des Fahrers bei der Routenwahl berücksichtigt werden.

Es ist daher Aufgabe der vorliegenden Erfindung, eine Vorrichtung und ein Verfahren zum Betreiben eines Fahrzeugs, für das Bestimmen einer von dem zu betreibenden Fahrzeug zurückzulegenden Wegstrecke anzugeben, welche die zurückzulegende Wegstrecke derart bestimmen, daß die bestimmte Wegstrecke in ihrer Gesamtheit für das Fahrzeug geeignet ist.

Bei der vorliegenden Erfindung wird diese Aufgabe durch die Merkmale der Ansprüche 1 und 3 gelöst.

Bei der erfindungsgemäßen Vorrichtung und bei dem erfindungsgemäßen Verfahren zum Betreiben eines Fahrzeugs, für das Bestimmen einer von dem zu betreibenden Fahrzeug zurückzulegenden Wegstrecke, wird dabei von der Überlegung ausgegangen, das zu betreibende Fahrzeug charakterisierende Mittel zu verwenden, welche die Bestimmung der zurückzulegenden Wegstrecke entsprechend den Eigenschaften des zu betreibenden Fahrzeugs beeinflussen.

Der Vorteil des erfindungsgemäßen Verfahrens bzw. der erfindungsgemäßen Vorrichtung ist darin zu sehen, daß durch die Beeinflussung der Bestimmung der zurückzulegenden Wegstrecke entsprechend der Eigenschaften des zu betreibenden Fahrzeugs sichergestellt werden kann, daß nur Wegstrecken gewählt und bestimmt werden, die für das zu betreibende Fahrzeug geeignet sind. Dadurch können beispielsweise etwaige Umwege vermieden werden, die entstehen, wenn auf der zurückzulegenden Wegstrecke Hindernisse liegen, z. B. Brücken mit zu geringer Tragkraft, die von dem zu betreibende Fahrzeug nicht passiert werden können.

Weitere Vorteile der vorliegenden Erfindung ergeben sich aus den abhängigen Ansprüchen sowie der nachfolgenden Beschreibung von Ausführungsbeispielen einer erfindungsgemäßen Vorrichtung anhand von Figuren.

Es zeigt:
- Fig. 1: eine Vorrichtung zum Betreiben eines Fahrzeugs, und
- Fig. 2: ein Ausführungsbeispiel der erfindungsgemäßen Vorrichtung zum Betreiben eines Fahrzeugs.

Zur Erleichterung des Verständnisses der vorliegenden Erfindung sind in den Figuren nur die Bestandteile der Ausführungsbeispiele dargestellt, die im Zusammenhang mit der Erfindung von Bedeutung sind. Gleiche Bestandteile in den Figuren weisen gleiche Bezugszeichen auf.

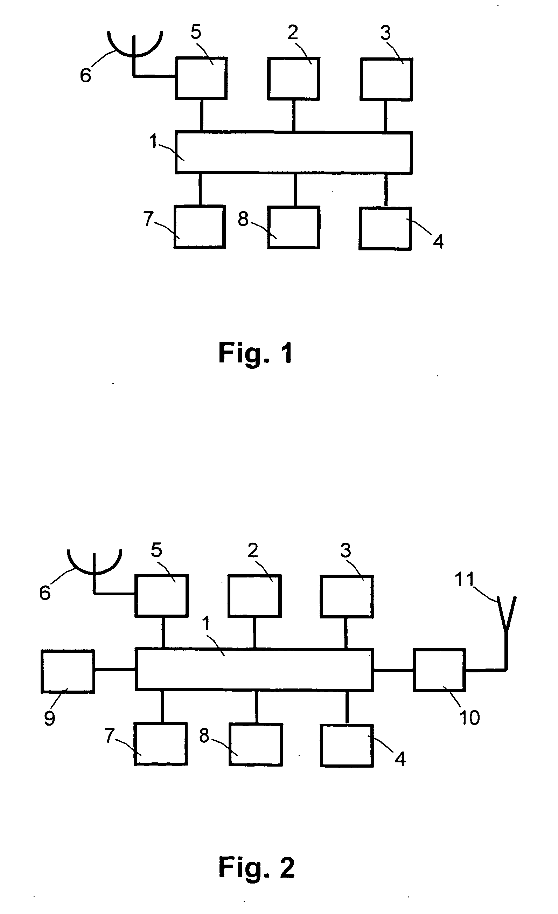

Figur 1 zeigt eine Vorrichtung zum Betreiben eines Fahrzeugs, für das Bestimmen einer von dem zu betreibenden Fahrzeug zurückzulegenden Wegstrecke.

Die Vorrichtung weist Mittel 1 zum Bestimmen einer zurückzulegenden Wegstrecke auf, die beispielsweise von einem Mikroprozessor mit zugehörigem Speicher sowie Steuerungs- und Auswertesoftware gebildet werden. An die Mittel 1 zum Bestimmen der zurückzulegenden Wegstrecke sind Mittel 2 zum Speichern von digitalisierten Straßenkarten angeschlossen, z. B. ein Speicher mit großem Speichervolumen, welcher dazu geeignet sein kann, Daten austauschbarer Speichermedien zu verarbeiten und mit den Mitteln 1 zum Bestimmen der zurückzulegenden Wegstrecke auszutauschen. Der Speicher kann beispielsweise von einem CD-ROM-Gerät und zugehöriger CD-ROM als Speichermedium gebildet werden. Auf dem Speichermedium sind in digitalisierter Form Daten gespeichert, die zur Navigation benötigt werden, z. B. die digitalisierten Straßenkarten sowie weitere Hinweise, die für einen Bediener der Vorrichtung im Zusammenhang mit dem Auffinden bestimmter Ziele von Bedeutung sein können. Derartige Hinweise können beispielsweise Informationen über die Lage von bestimmten Hotels, Museen, Tankstellen, Parkplätzen, Reparaturwerkstätten usw. sowie Informationen über die Art und den Zustand von Straßen, wie Breite, Steigung, Beschaffenheit, Höhenlage von Straßen, Belastbarkeit von Brücken usw. sein. Damit die Hinweise sowohl für den Bediener als auch für die Mittel 1 zum Bestimmen der zurückzulegenden Wegstrecke auswertbar sind, werden die Hinweise sowohl in alphanumerischer Form, z. B. Name und Anschrift eines bestimmten Hotels, als auch als entsprechende Markierung in den digitalisierten Straßenkarten gespeichert.

An die Mittel 1 zum Bestimmen der zurückzulegenden Wegstrecke sind außerdem Ein- und Ausgabemittel 3 angeschlossen, die z. B. von einem LC-Display sowie einer Tastatur oder einer berührungsempfindlichen Anzeige (Touch-Screen) gebildet werden können. Mittels der Ein- und Ausgabemittel 3 kann der Bediener beispielsweise einen gewünschten Zielort eingeben, zu dem die Mittel 1 zum Bestimmen der zurückzulegenden Wegstrecke eine vorteilhafte Fahrtroute bzw. Wegstrecke bestimmen sollen. Die Anweisungen an den Bediener hinsichtlich der bestimmten Wegstrecke erfolgen durch die Ein- und Ausgabemittel 3, z. B. mittels der Darstellung von Pfeilen, welche die jeweilige Fahrtrichtung angeben. Die Ein- und Ausgabemittel 3 können neben der optischen Anzeige mittels z. B. LC-Display zusätzlich, oder aus Sicherheitsgründen während der Fahrt ausschließlich, akustische Anweisungen erteilen, z. B. daß an der nächsten Kreuzung rechts abgebogen werden muß.

Zur akustischen Anzeige verfügen die Mittel 1 zum Bestimmen der zurückzulegenden Wegstrecke beispielsweise über einen Sprachsynthesizer dessen Informationen mittels eines in den Ein- und Ausgabemitteln 3 vorhandenen Verstärkers und Lautsprechers ausgegeben werden. An Stelle eines separaten Verstärkers und Lautsprechers kann auch Gebrauch von einem Autoradio oder Audiosystem gemacht werden, das ohnehin im Fahrzeug vorhanden ist.

Um mittels der digitalen Straßenkarten im Speicher 2 entsprechende Fahrtrouten bzw. zurückzulegende Wegstrecken sowie die jeweilige Position des Fahrzeugs bestimmen zu können, sind an die Mittel 1 zum Bestimmen der zurückzulegenden Wegstrecke außerdem Mittel 4, 5, 6 zur Feststellung der jeweiligen Position des Fahrzugs angeschlossen. Die Auswertung der Signale der Mittel 4, 5, 6 zur Feststellung der jeweiligen Position durch die Mittel 1 zum Bestimmen der zurückzulegenden Wegstrecke erlaubt die Bestimmung der aktuellen Position des Fahrzeugs sowie der Fahrtroute bzw. der zurückzulegenden Wegstrecke zum gewünschten Zielort. Die Mittel 4, 5, 6 zur Feststellung der jeweiligen Position umfassen zumindest Radsensoren 4. Zusätzlich können weitere Positionssensoren 5, 6 vorgesehen sein, welche beispielsweise eine satellitengestützte Navigation erlauben. Die Positionssensoren 5, 6 umfassen beispielsweise eine Antenne 6 zum Empfang von Satellitensignalen und eine Auswerteeinrichtung 5, welche eine Positionsbestimmung aus den Satellitensignalen vornimmt. Derartige Positionssensoren sind beispielsweise unter der Bezeichnung Global Positioning System (GPS) bekannt. In ihrer Gesamtheit bilden die Mittel 1 bis 4 bzw. 1 bis 6 ein Navigationssystem.

An die Mittel 1 zum Bestimmen der zurückzulegenden Wegstrecke sind darüber hinaus Mittel 7 angeschlossen, welche das zu betreibende Fahrzeug charakterisieren. Die das Fahrzeug charakterisierenden Mittel 7 können von einem Speicher, z. B. einem nichtflüchtigen Speicher wie einem EEPROM, gebildet werden, in dem die das Fahrzeug charakterisierenden Merkmale gespeichert sind. Bei den das Fahrzeug charakterisierenden Merkmalen handelt es sich insbesondere um Merkmale, welche unter Umständen die Benutzung bestimmter Straßen einschränken können, beispielsweise die Abmessungen des Fahrzeugs, insbesondere die Höhe und Breite des Fahrzeugs, das Gewicht des Fahrzeugs, usw. Weiterhin oder zusätzlich kann es sich bei den das Fahrzeug charakterisierenden Merkmalen um Merkmale handeln, welche unter Umständen die Benutzung bestimmter Straßen ermöglichen können, beispielsweise die Ausstattung des Fahrzeugs mit Winterreifen, Schneeketten, Allradantrieb usw.

Die im das Fahrzeug charakterisierenden Mittel 7 gespeicherten Merkmale können beispielsweise bei der Herstellung des Fahrzeugs gespeichert werden, sie können aber auch jederzeit nachträglich gespeichert oder geändert werden, beispielsweise durch den Bediener. Dazu kann es vorgesehen sein, daß alle charakteristischen Merkmale für bestimmte Fahrzeugtypen bereits gespeichert sind und vom Bediener über die Ein- und Ausgabemittel 3 durch Angabe des Fahrzeugtyps ausgewählt und aktiviert werden können, damit diese von dem Mittel 1 zum Bestimmen der zurückzulegenden Wegstrecke berücksichtigt werden. Ebenso oder zusätzlich können einzelne charakteristische Merkmale ausgewählt und aktiviert werden. In diesem Fall wird das aktivierte Merkmal zusammen mit eventuell bereits zuvor aktivierten Merkmalen von dem Mittel 1 zum Bestimmen der zurückzulegenden Wegstrecke berücksichtigt. Selbstverständlich können aktivierte Merkmale auch deaktiviert werden, z. B. falls in dem Fahrzeug keine Schneeketten mehr mitgeführt werden.

Wird vom Bediener mittels der Ein- und Ausgabemittel 3 ein Zielort eingegeben, bestimmen die Mittel 1 zum Bestimmen der zurückzulegenden Wegstrecke die Fahrtroute bzw. die zurückzulegende Wegstrecke, wobei neben der augenblicklichen Position, die aus den Signalen der Mittel 4, 5, 6 zur Feststellung der jeweiligen Position abgeleitet wird, die von den Mitteln 2 für die Speicherung von digitalisierten Straßenkarten stammenden Informationen sowie die im das Fahrzeug charakterisierenden Mittel 7 gespeicherten Merkmale berücksichtigt werden. Dadurch wird beispielsweise vermieden, daß Wegstrecken bestimmt werden, die Brücken aufweisen, deren Tragkraft für das Gewicht des Fahrzeugs nicht ausreichend ist. Ebenso können Unterführungen vermieden werden, deren lichte Höhe geringer als die Höhe des Fahrzeugs ist. In gleicher Weise werden schmale Straßen oder Durchgänge vermieden, falls das Fahrzeug eine gewisse Breite aufweist. Falls besondere Ausstattungsmerkmale wie Winterreifen und/oder Schneeketten und/oder Allradantrieb vorhanden sind, können Wegstrecken festgelegt werden, die z. B. Paßstraßen oder unbefestigte Straßen einschließen.

Weitere das Fahrzeug charakterisierenden Mittel 8 können vorgesehen sein, die mittels Sensoren Informationen über aktuelle Veränderungen bestimmter Merkmale des zu betreibenden Fahrzeugs zur Verfügung stellen. Beispielsweise können die das Fahrzeug charakterisierenden Mittel 8 einen Sensor umfassen, der feststellt, ob sich ein Anhänger an einer Anhängerkupplung des Fahrzeugs befindet. Dies kann z. B. durch die Überprüfung eines der für die Anhängerkupplung vorgesehenen elektrischen Kreise erfolgen, z. B. eines Blinkerkreises.

Wird durch die das Fahrzeug charakterisierenden Mittel 8 eine Veränderung festgestellt, verändern die Mittel 1 zum Bestimmen der zurückzulegenden Wegstrecke bei Bedarf eine zu bestimmende Fahrtroute bzw. die zurückzulegende Wegstrecke. Wird von dem oben beschriebenen Sensor 8 beispielsweise festgestellt, daß ein Anhänger an das Fahrzeug angehängt wurde, werden beispielsweise Paßstraßen bei der Bestimmung der zurückzulegenden Wegstrecke nicht mehr berücksichtigt.

Weitere Beschränkungen wie zulässige Höchstgeschwindigkeit, Steigungsprofile, Gewichtsbeschränkungen, Fähren usw. können in gleicher Weise von den Mitteln 1 zum Bestimmen der zurückzulegenden Wegstrecke, aufgrund der Merkmale und/oder Informationen der das Fahrzeug charakterisierenden Mittel 7 und/oder 8 berücksichtigt werden.

Figur 2 zeigt ein Ausführungsbeispiel der erfindungsgemäßen Vorrichtung zum Betreiben eines Fahrzeugs, für das Bestimmen einer von dem zu betreibenden Fahrzeug zurückzulegenden Wegstrecke.

Der Aufbau der Mittel 1 zum Bestimmen des zurückzulegenden Wegs sowie der angeschlossenen Bestandteile 2 bis 8 entspricht dem im Zusammenhang mit Figur 1 beschriebenen Aufbau.

Zusätzlich ist an die Mittel 1 zum Bestimmen der zurückzulegenden Wegstrecke eine Echtzeituhr 9, die über eine Kalenderfunktion verfügen kann, angeschlossen.

Die Mittel 1 zum Bestimmen des zurückzulegenden Wegs können dann zusätzlich die aktuelle Uhrzeit bei der Bestimmung des zurückzulegenden Wegs berücksichtigen. Beispielsweise kann es vorgesehen sein, daß für Fahrten, die bei Dunkelheit stattfinden, keine Nebenstrecken berücksichtigt werden.

Stellt die Echtzeituhr 8 zusätzlich das aktuelle Datum zur Verfügung, können jahreszeitliche Einflüsse berücksichtigt werden. Beispielsweise kann es vorgesehen sein, daß hochgelegene Paßstraßen von den Mitteln 1 zum Bestimmen der zurückzulegenden Wegstrecke nicht berücksichtigt werden.

Weiterhin sind an die Mittel 1 zum Bestimmen der zurückzulegenden Wegstrecke Kommunikationsmittel 10, 11 angeschlossen.

Die Kommunikationsmittel 10, 11 empfangen aktuelle Informationen, welche von den Mitteln 1 zum Bestimmen der zurückzulegenden Wegstrecke berücksichtigt werden. Als Kommunikationsmittel 10, 11 kann beispielsweise ein Mobiltelefon oder ein Rundfunkempfänger, der Zusatzdaten auswerten kann, z. B. ein RDS-Empfänger mit TMC-Funktion oder ein DAB-Empfänger, verwendet werden. Die von den Kommunikationsmitteln 10, 11 empfangenen aktuellen Informationen erlauben es beispielsweise Straßen bei der Bestimmung der zurückzulegenden Wegstrecke nicht zu berücksichtigen, die momentan schneebedeckt sind, falls das Fahrzeug nicht über Winterreifen und/oder Schneeketten verfügt.

Darüber hinaus sind weitere Abweichungen vom oben beschriebenen Aufbau sowie der Bestimmung der zurückzulegenden Wegstrecke möglich.

In einer Weiterbildung kann es vorgesehen sein, daß der die das Fahrzeug charakterisierenden Mittel 7 bildende Speicher vom eingangs beschriebenen Speicher der Mittel 1 zum Bestimmen der zurückzulegenden Wegstrecke gebildet wird.

Erfindungsgemäß wird an die Mittel 1 zum Bestimmen der zurückzulegenden Wegstrecke ein Thermometer angeschlossen. Die Festlegung der zurückzulegenden Wegstrecke wird in Abhängigkeit von der Außentemperatur erfolgen. Beispielsweise kann es vorgesehen sein, daß bei Temperaturen unter null Grad Nebenstrecken oder Paßstraßen vermieden werden, da derartige Straßen besonders gefährdet hinsichtlich Schnee- und Eisbelag sind.

## Patentansprüche

1. Vorrichtung zum Betreiben eines Fahrzeugs, für das Bestimmen einer von dem zu betreibenden Fahrzeug zurückzulegenden Wegstrecke, mit Mitteln (1) zum Bestimmen der zurückzulegenden Wegstrecke, und damit verbundenen Mitteln (2) zum Speichern von digitalisierten Straßenkarten, Ein- und Ausgabemitteln (3), und Mitteln (4; 4, 5, 6) zur Feststellung der jeweiligen Position des Fahrzeugs, wobei die Mittel (1) zum Bestimmen der zurückzulegenden Wegstrecke mit das zu betreibende Fahrzeug charakterisierenden Mitteln (7; 8) verbunden sind, wobei im Gebrauch die Bestimmung der zurückzulegenden Wegstrecke durch die Mittel (1) zum Bestimmen der zurückzulegenden Wegstrecke in Abhängigkeit von den das zu betreibende Fahrzeug charakterisierenden Mitteln (7; 8) vorgenommen wird und die das Fahrzeug charakterisierenden Mittel (7) von einem Speicher gebildet werden, wobei in dem Speicher Merkmale des zu betreibenden Fahrzeugs gespeichert sind, welche eine Eignung und/oder Nichteignung des zu betreibenden Fahrzeugs für bestimmte Wegstrecken beschreiben,
**dadurch gekennzeichnet, dass**
die das Fahrzeug charakterisierenden Mittel (8) von mindestens einem Sensor gebildet werden, der Informationen über aktuelle Veränderungen des zu betreibenden Fahrzeugs zur Verfügung stellt, wobei der Sensor (8) überprüft, ob das zu betreibende Fahrzeug mit einem Anhänger verbunden ist und ein Thermometer (9) mit den Mitteln (1) zum Bestimmen der zurückzulegenden Wegstrecke verbunden ist, wobei im Gebrauch die Bestimmung der zurückzulegenden Wegstrecke durch die Mittel (1) zum Bestimmen der zurückzulegenden Wegstrecke in Abhängigkeit von der durch das Thermometer (9) ermittelten Temperatur und im Abhängigkeit von Signal des Sensors (8) vorgenommen wird.

2. Vorrichtung nach Anspruch 1,
**dadurch gekennzeichnet, dass**
Kommunikationsmittel (10, 11) mit den Mitteln (1) zum Bestimmen der zurückzulegenden Wegstrecke verbunden sind, wobei die Bestimmung der zurückzulegenden Wegstrecke durch die Mittel (1) zum Bestimmen der zurückzulegenden Wegstrecke in Abhängigkeit von durch die Kommunikationsmittel (10, 11) empfangenen Informationen vorgenommen wird.

3. Verfahren zum Betreiben eines Fahrzeugs, für das Bestimmen einer von dem zu betreibenden Fahrzeug zurückzulegenden Wegstrecke,
mit nachfolgenden Verfahrensschritten:
- Festlegen eines Zielorts,
- Bestimmen der aktuellen Position des Fahrzeugs, und
- Bestimmen der zurückzulegenden Wegstrecke, aufgrund der aktuellen Position des Fahrzeugs und des Zielorts, unter Berücksichtigung von das zu betreibende Fahrzeug charakterisierenden Eigenschaften
und die das zu betreibende Fahrzeug charakterisierenden Eigenschaften Merkmale des Fahrzeugs sind, insbesondere Abmessungen, Gewicht und Antriebsart, wobei die das zu betreibende Fahrzeug charakterisierenden Eigenschaften mindestens eine Ausstattung des Fahrzeugs betreffen,
**dadurch gekennzeichnet, dass**
die das zu betreibende Fahrzeug charakterisierenden Eigenschaften die Bereifung und/oder Schneeketten und/oder Anhänger sind, wobei eine Außentemperatur erfasst und bei der Bestimmung der zurückzulegenden Wegstrecke zusätzlich berücksichtigt wird.

4. Verfahren nach Anspruch 3,
**dadurch gekennzeichnet, dass**
aktuelle Informationen über den Zustand von Straßen empfangen und bei der Bestimmung der zurückzulegenden Wegstrecke berücksichtigt werden.

## Claims

1. The appliance for operating a vehicle, for determining a distance to be covered by the vehicle to be operated, with devices (1) for determining the distance to be covered and devices (2) connected with it for storing the digitalized road maps, input and output devices (3) and devices (4; 4, 5 and 6) for establishing the vehicle's respective position; whereby the devices (1) for determining the distance to be covered are connected with the devices (7 and 8) characterizing the vehicle to be operated; whereby the determination of the distance to be covered in use will be made by the devices (1) for determining the distance to be covered, by relying on the devices (7 and 8) characterizing the vehicle to be operated and the devices (7) characterizing the vehicle comprise a memory; whereby the features of the vehicle to be operated are stored in the memory, which describes the suitability or unsuitability of the vehicle to be operated for specific distances; identified in this way, so that the devices (8) characterizing the vehicle comprise one sensor at least, which provides information about current changes of the vehicle to be operated; whereby the sensor (8) checks whether the vehicle to be operated is connected with a trailer and a thermometer (9) is connected with the devices (1) for determining the distance to be covered; whereby the determination of the distance to be covered in use will be made by the devices (1) for determining the distance to be covered, by relying on the temperature that is ascertained by the thermometer (9) and by relying on the signal from the sensor (8).

2. The appliance according to Claim 1; identified in this way, so that the communication devices (10 and 11) are connected with the devices (1) for determining the distance to be covered; whereby the determination of the distance to be covered will be made by the devices (1) for determining the distance to be covered, by relying on the information that is received from the communication devices (10 and 11).

3. The procedure for operating a vehicle, for determining one of the distances to be covered by the vehicle to be operated, with the procedural steps that are described below:
- stipulating a place of destination,
- determining the vehicle's current position and
- determining the distance to be covered, on account of the vehicle's current position and the place of destination, subject to considering that the characterizing distinctive features of the vehicle to be operated are the vehicle's characteristic features: especially the dimensions, weight and kind of drive; whereby the characterizing distinctive features of the vehicle to be operated refer to at least one item of the vehicle's equipment; identified in this way, so that the characterizing distinctive features of the vehicle to be operated are the tyres or snow chains - or both - or the trailer - or both; whereby an external temperature will be recorded and additionally considered when determining the distance to be covered.

4. The procedure according to Claim 3; identified in this way, so that current information about the condition of roads will be received and considered when determining the distance to be covered.

## Revendications

1. Dispositif pour commander un véhicule, pour la détermination d'un trajet à parcourir par le véhicule à commander, comportant des moyens (1) pour déterminer le trajet à parcourir, et des moyens (2) reliés à ceux-ci pour mémoriser des cartes routières numérisées, des moyens de saisie et de sortie (3), et des moyens (4 ; 4, 5, 6) pour déterminer la position respective du véhicule, dans lequel les moyens (1) pour la détermination du trajet à parcourir sont reliés à des moyens (7 ; 8) caractérisant le véhicule à commander, dans lequel, en utilisation, la détermination du trajet à parcourir est effectuée par les moyens (1) pour déterminer le trajet à parcourir en fonction des moyens (7 ; 8) caractérisant le véhicule à commander et les moyens (7) caractérisant le véhicule sont formés par une mémoire, où des propriétés du véhicule à commander sont mémorisés dans la mémoire, qui décrivent une qualification et/ou une non qualification du véhicule à commander pour des trajets déterminés,
**caractérisé en ce que**
les moyens (8) caractérisant le véhicule sont formés par au moins un capteur, qui dispose d'informations concernant les changements réels du véhicule à commander, où le capteur (8) vérifie que le véhicule à commander est attelé à une remorque et un thermomètre (9) est relié aux moyens (1) pour déterminer le trajet à parcourir, où, en utilisation, la détermination du trajet à parcourir est effectuée par les moyens (1) pour déterminer le trajet à parcourir en fonction de la température détectée par le thermomètre (9) et en fonction du signal du capteur (8).

2. Dispositif selon la revendication 1, **caractérisé en ce que** les moyens de communication (10, 11) sont reliés aux moyens (1) pour déterminer le trajet à parcourir, où la détermination du trajet à parcourir est effectuée par les moyens (1) pour déterminer le trajet à parcourir en fonction des informations reçues par les moyens de communication (10, 11).

3. Procédé pour commander un véhicule, pour la détermination d'un trajet à parcourir par le véhicule à commander, comportant les étapes de procédé suivantes :
- définition d'une destination,
- détermination de la position réelle du véhicule, et
- détermination du trajet à parcourir, en raison de la position réelle du véhicule et de la destination, en prenant en compte les propriétés caractérisant du véhicule à commander
et les propriétés caractérisant le véhicule à commander sont les caractéristiques du véhicule, en particulier ses dimensions, son poids et le type de transmission, où les propriétés caractérisant le véhicule à commander concernent au moins un équipement du véhicule,
**caractérisé en ce que**
les propriétés caractérisant le véhicule à commander sont les pneus et/ou les chaînes et/ou la remorque, où une température extérieure est détectée et en plus prise en considération lors de la détermination du trajet à parcourir.

4. Procédé selon la revendication 3, **caractérisé en ce que** des informations réelles concernant l'état de la route sont reçues et prises en compte lors de la détermination du trajet à parcourir.
